# EUROPÄISCHE PATENTSCHRIFT

(11) **EP 1 081 288 B1**
(45) Veröffentlichungstag und Bekanntmachung des Hinweises auf die Patenterteilung: **14.12.2005**
(21) Anmeldenummer: 00114398.1
(22) Anmeldetag: 05.07.2000
(51) Int. Cl.: E01H 1/05

(54) **Kehrmaschine**
Sweeping machine
Balayeuse

(30) Priorität: 03.09.1999 DE 19942233
(43) Veröffentlichungstag der Anmeldung: 07.03.2001
(73) Patentinhaber: Julius Tielbürger GmbH & Co. KG, D-32351 Stemwede-Oppenwehe (DE)
(72) Erfinder: Tielbürger, Lydia, 32351 Stemwede-Oppenwehe (DE)
(74) Vertreter: Specht, Peter

(56) Entgegenhaltungen:
- DE-A- 4 103 537
- GB-A- 374 969
- GB-A- 686 596
- US-A- 1 452 735

## Beschreibung

Die Erfindung betrifft eine Kehrmaschine nach dem Oberbegriff des Anspruches 1.

Das in Frage kommende Kehrmaschine ist bevorzugt eine motorgetriebene und handgeführte Kehrmaschine, kann jedoch auch ein Aufsitztraktor sein. Sofern es sich um eine Kehrmaschine handelt, ist das Pflegewerkzeug eine rotierende antreibbare Kehrbürste. Ein Aufsitztraktor kann mit verschiedenen Pflegewerkzeugen ausgestattet sein, die je nach Bedarf auswechselbar sind. Die Pflegewerkzeuge für die in Frage kommenden motorgetriebenen Landschaftspflegegeräte sollen entweder stets Bodenkontakt haben oder in einem gleichbleibenden Abstand zum Boden stehen. Bei einer Kehrbürste wird ein ständiger Bodenkontakt gewünscht, und außerdem soll die Kehrbürste mit einer möglichst gleichbleibenden Kraft an die zu kehrende Fläche gedrückt werden. Bei einer handgeführten Kehrmaschine ist vor oder hinter der Kehrbürste ein in der Höhe verstellbares Laufrad vorgesehen. Die Höhenverstellbarkeit soll sicherstellen, daß auch die Borsten der Kerhrbürste dann noch Kontakt zum Boden haben, wenn sie sich durch den Gebrauch abnutzen bzw. die Borsten kürzer werden. Bei den in Frage kommenden Kehrmaschinen liegt bislang die angetriebene Achse an der der Kehrbürste gegenüberliegenden Seite. Zwischen der angetriebenen Achse und der Kehrbürste liegt das in der Höhe verstellbare Laufrad. Das für den Bodenkontakt der Kehrbürste notwendige Laufrad ist eine nicht angetriebene Lenkrolle. Die Führungsholme zum Lenken der Kehrmaschine liegen der Kehrbürste gegenüber, die in Fahrtrichtung vorn liegt. Die Laufräder der Kehrmaschine bzw. die Achsen, auf denen die Laufräder aufgesetzt sind, sind funktionell in einem Gehäuse angeordnet, in dem im wesentlichen die Antriebsteile für das Pflegegerät und für die angetriebenen Räder montiert sind. Die Kehrmaschine besitzt demzufolge kein eigenes Fahrwerk in Form einer Baugruppe, die sich unabhängig vom Pflegewerkzeug bewegt. Bei einer solchen Ausführung ergibt sich zwangsläufig, daß die Kehrbürste keinen Kontakt mehr zum Boden hat, wenn das einstellbare Laufrad über eine Erhöhung fährt. Es würde dann der Schmutz in einem entsprechenden Bereich liegen bleiben. Andererseits würden die Borsten der Kehrbürste extrem stark verformt, wenn das einstellbare Laufrad durch eine Vertiefung fährt.

Es ist bereits eine Kehrmaschine zum Kehren einer Straße aus der US-PS 1 452 735 bekannt. Diese Kehrmaschine wird gezogen und hat einen Antrieb, der von den Rädern abgeleitet wird. Die Kehrwalze liegt, in Laufrichtung gesehen, hinten. Bei einer Ausführung ist die Kehrwalze seitlich in zwei Wippen gelagert. Diese Wippe ist auf eine Achse aufgesetzt. Jede Wippe ist mit einem Gegengewicht an der der Kehrwalze gegenüberliegenden Seite ausgestattet, so daß nicht das volle Gewicht der Kehrwalze auf die Borsten drückt. Die Wippen sind wie zweiarmige Hebel zu sehen, die eine schonende Behandlung aufgrund der Kräfteverhältnisse nicht ermöglichen. Die Schwenkachse für die Wippen bzw. für die Kehrbürste liegt bei dieser Ausführung innerhalb des Schwenkbereiches der Wippen. Eine derartige Kehrmaschine ist mit den zuvor geschilderten Kehrmaschinen nicht vergleichbar, da sie in früheren Zeiten ausschließlich zum Fegen von Straßen verwendet werden konnte. Die heutzutage geforderte Wendigkeit, beispielsweise zum Kehren von relativ kleinen Flächen ist bei dieser Kehrmaschine nicht gegeben. Diese Wendigkeit ist jedoch notwendig, um beispielsweise auch die Ecken von relativ kleinen Flächen zu kehren. Diese vorbekannte Straßenkehrmaschine ist mit den eingangs geschilderten Kehrmaschinen von der Funktion und von der Anwendung her nicht vergleichbar. Die DE 91 03 537 11 offenbart eine Maschine oder Gerät zur Bodenbearbeitung, Bestellung und Ernte, zum Vertikutieren, Planieren und flächenhaften Verfestigen von Erdboden und Baustoffen, sowie zum Räumen, Kehren und zur Flächenbehandlung und Reinigung und dgl. mit Arbeitswerkzeugen, die an einem Gerätsrahmen gehalten und für die vorgeschene Arbeit entsprechend ausgebildet sind, wobei die Arbeitswerkzeuge bzw. der Geräterahmen mittels mindestens einer Ausgleichsvorrichtung schwenkbar gehalten sind und diese Ausgleichsvorrichtung Schwenkbewegungen der Abeitswerkzeuge bzw. des Geräterahmens um mindestens eine ideelle Schwenkachse zuläßt.

Der Erfindung liegt die Aufgabe zugrunde, eine Kehrmaschine der eingangs genannten Art so zu gestalten, daß das Pflegewerkzeug auch bei unebenen Bodenflächen stets geschont wird, und daß es darüber hinaus einfach zu bedienen und äußerst wendig ist, so daß es auf einer äußerst kleinen Fläche gewendet werden kann.

Die gestellte Aufgabe wird erfingdungsgemäß durch eine Kehrmaschine mit den Merkmalen des Anspruches 1 gelöst.

Durch die Verlagerung des Drehpunktes der Werkzeughalterung außerhalb seines Schwenkbereiches kann die Schwenkachse so gelegt werden, daß beim Überfahren von Unebenheiten durch die Kehrbürste die Werkzeughalterung so geschwenkt wird, daß die Borsten der Kehrbürste stets geschont werden. Außerdem läßt eine derartige Konstruktion eine äußerst geringe Baulänge zu, so daß dadurch schon die Wendigkeit des Kehrmaschine begünstigt wird. Die schwenkbaren Lenker sind an ortsfesten Bauteilen der Kehrmaschine schwenkbar angeordnet, beispielsweise am Fahrschemel der Kehrmaschine. Durch die Verlagerung des Drehpunktes der Werkzeughalterung außerhalb seines Schwenkbereiches kann die bislang verwendete höbenverstellbare Lenkrolle entfallen. Die Schwenkachse für die Werkzeughalterung könnte sinngemäß auch als imaginäre Schwenkachse bezeichnet werden.

Diese Schwenkachse könnte durch eine entsprechende Auslegung des Anbindungsgestänges sogar unterhalb der zu kehrenden Fläche liegen. Zweckmäßigerweise ist die Schwenkachse der Werkzeughalterung gegenüber der Drehachse des Pflegewerkzeuges nach unten versetzt. Es ist dann notwendig, daß die Anbindungsgestänge unterhalb der Werkzeughalterung liegen, so daß die Schwenkachse der Werkzeughalterung in einem geringstmöglichen Abstand zum Boden steht. Bei dem vorliegenden Gerät weist die Werkzeughalterung zwei im seitlichen Bereich des Landschaftspflegerätes liegende, baugleiche Tragarme mit jeweils einem Anbindungsgestänge auf. Bei einer ausreichenden Stabilität ist auch ein einzelner Tragarm möglich. In einfachster Ausführung besteht des Anbindungsgestänge aus einer Mehrgelenkkette, vorzugsweise- aus einer Viergelenkkette. Die beiden Lenker sind vorzugsweise gegenüber der mittleren Vertikalen symmetrisch angeordnet und sind vorzugsweise um zwei höhengleiche feste Achsen schwenkbar. Diese - festsitzenden Achsen sind dem Fahrschemel de Kehrmaschine zugeordnet. Die gegenüberliegenden Enden verschwenken auf einem Kreisbogen und sind in Langlöchern geführt. Zweckmäßigerweise sind diese Enden nicht direkt an der Werkzeughalterung angelenkt, sondern mittels einer Koppel, die mit der Werkzeughalterung fest verbunden ist. Zweckmäßigerweise sind die beiden Tragarme der Werkzeughalterung an den dem Pflegewerkzeug abgewandten Ende U- oder bogenförmig gestaltet. An dem unteren Holm ist dann zweckmäßigerweise das Anbindungsgestänge angelenkt. Die Lenkbarkeit und die Wendigkeit bzw. das Wenden der Kehrmaschine auf engstem Raum wird begünstigt, wenn es an dem hinterem, dem Führungslenker zugeordneten Ende vorzugsweise mit mindestens einer Lenkrolle ausgestattet ist. Die Kehrmaschine kann kompakt gebaut werden und ist äußerst wendig. Diese Eigenschaft wird noch begünstigt, wenn die Kehrmaschine mit einer zwischen den Lenkrollen und dem Pflegewerkzeug liegenden angetriebenen Achse ausgestattet ist. Diese Achse liegt etwa im mittleren Bereich zwischen den Lenkrollen und dem Pflegewerkzeug. Das Drehen bzw. das Wenden wird noch begünstigt, wenn auf die angetriebene Achse ein Rad drehfest oder ein Zwillingsrad drehfest aufgesetzt ist. Sofern es sich nur um ein Rad handelt, liegt dieses in der Mittellängsachse der Kehrmaschine, während bei einem Zwillingsrad mit zwei direkt nebeneinander angeordneten Rädern diese in einem gleichen Versatz zur Mittellängsachse bestehen. Die Kontaktfläche des Rades bildet dann den Mittelpunkt des Wendekreises für die Kehrmaschine wobei dieser Mittelpunkt bei einem Zwillingslaufrad dann zwischen den beiden Rändern liegt. Das Getriebe der Kehrmaschine ist zweckmäßigerweise auf dem Fahrschemel angeordnet. Damit das Pflegewerkzeug mit einer optimalen Kraft gegen die zu pflegende Fläche gedrückt wird, muß der Abstand zwischen dem Pflegewerkzeug, beispielsweise der Drehachse der Kehrbürste und den festen Drehpunkten der Lenker des Anbindungsgestänges entsprechend gewählt werden.

Die Lenker der Mehrgelenkkette sind an einem Ende um ortsfeste Achsen schwenkbar, während sie an den gegenüberliegenden Enden in Langlöchern geführt sind. Dabei bilden die Langlöcher sinngemäß Anschläge, um die Schwenkbewegung der Werkzeughalterung zu begrenzen. Für die in Frage kommende Kehrmaschine werden unterschiedliche Kehrbürsten verwendet, deren Gewichte schwanken. Um diese Schwankungen zu berücksichtigen, ist in weiterer Ausgestaltung vorgesehen, daß wenigstens eine der ortsfesten Achsen und/oder wenigstens einer der in den Langlöchern und in die Lenker eingesetzten Bolzen verstellbar bzw. verschiebbar ist. Während des Betriebes der Kehrmaschine werden jedoch die ortsfesten Achsen nicht verstellt. Je nach der Verstellung der ortsfesten Achsen bzw. der Bolzen kann der Schwenkpunkt für die Werkzeughalterung in eine bestimmte Richtung verschoben werden.

Anhand der beiliegenden Zeichnung wird die Erfindung noch näher erläutert. Es zeigt:

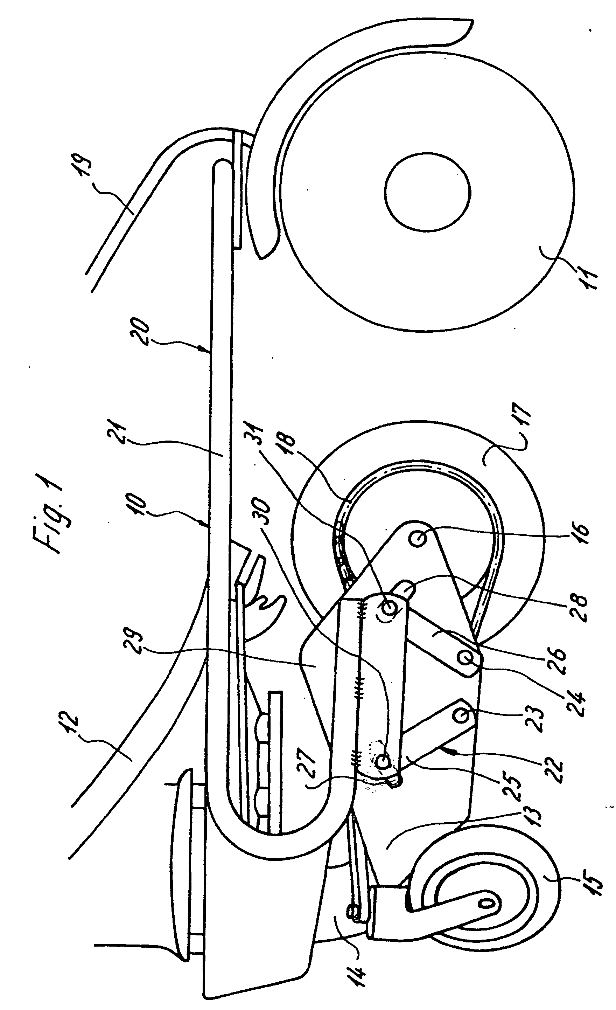

- Figur 1: eine erfindungsgemäße handgeführte Kehrmaschine in einer Teilseitenansicht, rein schematisch.

Aus Gründen der vereinfachten Darstellung ist die erfindungsgemäße Kehrmaschine 10 nur teilweise dargestellt. Sie ist mit einem Pflegewerkzeug in Form einer rotierend antreibbaren Kehrbürste 11 ausgestattet, die in der normalen Vorwärtsfahrt während des Kehrens in Fahrtrichtung vom liegt. Am gegenüberliegenden hinteren Ende ist andeutungsweise der Führungslenker 12 dargestellt. Auf einem Fahrschemel 13 ist ein andeutungsweise dargestelltes Getriebe 14 montiert. An dem der Kehrbürste 11 gegenüberliegenden hinteren Ende ist die Kehrmaschine 10 mit zwei Lenkrollen 15 ausgestattet. Zwischen der Kehrbürste 11 und den Lenkrollen 15 ist eine angetriebene Achse 16 angeordnet, auf die ein Antriebsrad 17 drehfest aufgesetzt ist. Anstelle eines Antriebsrades 17 können auch Zwillingsräder auf die Achse 16 drehfest aufgesetzt sein, die zweckmäßigerweise in einem geringen Abstand zueinander stehen. Das Antriebskettenrad 18 steht dann bevorzugt zwischen den beiden Rädern des Zwillingsrades. Wie die Figur 1 zeigt, ist die Achse 16 mittig oder annähernd mittig zwischen der Kehrbürste und den Lenkrollen 15 angeordnet. Das Antriebsrad 17 ist so auf die Achse 16 gesetzt, daß es in der Mittellängsachse der Kehrmaschine 10 steht. Sofern ein Zwillingsrad verwendet wird, stehen die beiden Räder im gleichen Abstand zu dieser Mittellängsachse. In nicht näher dargestellter Weise ist dem Getriebe 14 ein Verbrennungsmotor zugeordnet. Im Betriebszustand wird die Kehrbürste 11 über eine Stange 19 gegenüber der festen Achse 16 schräggestellt.

Die Kehrbürste 11 ist an einer Werkzeughalterung 20 aufgehängt. Die Werkzeughalterung 20 besteht im dargestellten Ausführungsbeispiel im wesentlichen aus zwei an den Längsseiten der Kehrmaschine 10 schwenkbar gelagerten Tragarmen 21, die mit Anbindungsgestängen 22 fest verbunden sind. Im dargestellten Ausführungsbeispiel ist jedes Anbindungsgestänge 22 als Viergelenkkette ausgebildet, die zwei um ortsfeste Achsen 23, 24 schwenkbare Lenker 25, 26 aufweist. Diese ortsfesten Achsen 23, 24 liegen im dargestellten Ausführungsbeispiel den Tragarmen 21 abgewandt, d.h., im vorliegenden Ausführungsbeispiel sind sie gegenüber diesem nach unten versetzt. Die gegenüberliegenden Enden der Lenker 25, 26 sind in Langlöchern 27, 28 geführt. Die den ortsfesten Achsen 23, 24 gegenüberliegenden Enden der Lenker 25, 26 sind durch eine Koppel 29 verbunden. Im dargestellten Ausführungsbeispiel ist der der Kerhrbürste 11 abgewandt liegende Bereich jedes Tragarmes 21 U-oder bogenförmig gestaltet, wobei der gebogene Bereich anders herum nach unten gerichtet ist.

Die Schwenkachse der Werkzeughalterung 20 ist in der Figur 1 nicht dargestellt. Es ergibt sich jedoch aus der Anordnung, daß sie außerhalb, und zwar unterhalb des Schwenkbereiches der beiden Tragarme 21 liegt. Je nach Gestaltung des Anbindungsgestänges 22 kann die Schwenkachse variiert werden. Im vorliegenden Ausführungsbeispiel verlagert sie sich, wenn die Werkzeughalterung 20 geschwenkt wird.

Es ergibt sich außerdem aus der Figur 1, daß Unebenheiten der zu kehrenden Fläche schonend für die Kehrbürste 11 überfahren werden, ohne daß es Bereiche gibt, die von der Kehrbürste 11 nicht mehr erfaßt werden und demzufolge verschmutzt bleiben. Dazu ist die spezielle Auslegung des Abstandes zwischen der Kehrbürste 11 und dem Anbindungsgestänge 22 erforderlich. Es ergibt sich außerdem, daß die Länge der Kehrmaschine 10 besonders klein ist, da die angetriebene Achse 16 im mittleren Bereich der Kehrmaschine liegt, bezogen auf die Länge. Die beiden im seitlichen Bereich angeordneten Lenkrollen 15 in Verbindung mit einem Antriebsrad 17 oder einem Zwillingsrad ergibt sinngemäß ein Dreirad, so daß die Kehrmaschine 10 um die Kontaktfläche des Antriebsrades 17 drehbar ist. Außerdem kann in einfachster Weise die Kehrmaschine entgegen der normalen Vorwärtsfahrtrichtung von Hand zurückgezogen werden, was besonders vorteilhaft ist, wenn relativ kleine Flächen gekehrt werden. Durch die schwenkbare Werkzeughalterung in Verbindung mit den Anbindungsgestängen 22 erfolgt sinngemäß auch ein selbsttätiges Nachstellen der sich im Lauf der Betriebsdauer im Durchmesser verkleinernden Kehrbürste 11.

Im dargestellten Ausführungsbeispiel sind die ortsfesten Achsen 23, 26 unverschiebbar angeordnet. Im Gegensatz zu der dargestellten Ausführung könnte eine der beiden ortsfesten Achsen 23, 26 zur Verlagerung des Schwenkpunktes der Werkzeughalterung 20 einstellbar bzw. verschiebbar sind. Alternativ wäre es auch möglich, die Langlöcher 27, 28 zu verschieben, so daß die Lenker 25, 26 von der dargestellten V-förmigen Stellung abweichen. Außerdem könnten auch die in den Langlöchern 27, 28 geführten Bolzen 30, 31 verstellt werden. Für die Verlagerung des Schwenkpunktes ist es ausreichend, wenn eines der genannten Bauteile verschwenkt wird.

Die Erfindung ist nicht auf das dargestellte Ausführungsbeispiel beschränkt. Wesentlich ist, daß das Pflegewerkzeug, beispielsweise in Form der Kehrbürste 11 an einer schwenkbaren Werkzeughalterung 20 angeordnet ist, wobei der Schwenkpunkt außerhalb des Schwenkbereiches der Werkzeughalterung 20 liegt. Diese Möglichkeit ergibt sich aus dem Anbindungsgestänge 22.

### Bezugszeichenliste

- 10: Kehrmaschine
- 11: Kehrbürste
- 12: Führungslenker
- 13: Fahrschemel
- 14: Getriebe
- 15: Lenkrolle
- 16: Achse
- 17: Antriebsrad
- 18: Antriebskettenrad
- 19: Stange
- 20: Werkzeughalterung
- 21: Tragarm
- 22: Anbindungsgestänge
- 23: Achse
- 24: Achse
- 25: Lenker
- 26: Lenker
- 27: Langloch
- 28: Langloch
- 29: Koppel
- 30: Bolzen
- 31: Bolzen

## Patentansprüche

1. Kehrmaschine (10) mit mehreren Laufrädern (15, 17), mit einem Antriebsmotor und einem Getriebe (14) sowie einem rotierend antreibbaren Pflegewerkzeug (11), welches an einer schwenkbaren Werkzeughalterung (20) gelagert ist und in der normalen Vorwärtsfahrt in Fahrtrichtung vom liegt, **dadurch gekennzeichnet, dass** die schwenkbare Werkzeughalterung (20) an wenigstens einem Anbindungsgestänge (22) festgelegt ist, welches zumindest zwei um ortsfeste Achsen (23, 24) schwenkbare Lenker (25, 26) derart aufweist, dass die Schwenkachse der Werkzeughalterung (20) ausserhalb des Schwenkbereiches der Werkzeughalterung (20) liegt, so dass das Pflegewerkzeug (11) frei schwenkbar ist, und die Schwenkachse der Werkzeughalterung (20) gegenüber der Drehachse des Pflegewerkzeuges (11) nach unten versetzt ist und in einem geringstmöglichen Abstand zum Boden steht.

2. Kehrmaschine nach Anspruch 1, **dadurch gekennzeichnet, dass** die Werkzeughalterung (20) mindestens einen Tragarm (21) aufweist, der oberhalb des Anbindungsgestänges (22) steht.

3. Kehrmaschine nach Anspruch 1 oder 2, **dadurch gekennzeichnet, dass** das Anbindungsgestänge (22) als Mehrgelenkkette, vorzugsweise als Viergelenkkette ausgebildet ist.

4. Kehrmaschine nach einem oder mehreren der vorhergehenden Ansprüche 1 bis 3, **dadurch gekennzeichnet, dass** die Lage der Schwenkachse der Werkzeughalterung (20) im Zuge des Verschwenkens der Werkzeughalterung (20) sich verändert.

5. Kehrmaschine nach einem oder mehreren der vorhergehenden Ansprüche 2 bis 4, **dadurch gekennzeichnet, dass** die verschwenkbaren den ortsfesten Achsen (23, 24) abgewandten Enden der Lenker (25, 26) mittels einer Koppel (29) verbunden sind, und dass die Koppel (29) mit dem mindestens einen Tragarm (21) der Werkzeughalterung (20) fest verbunden ist.

6. Kehrmaschine nach einem oder mehreren der vorhergehenden Ansprüche 2 bis 4, **dadurch gekennzeichnet, dass** der mindestens eine Tragarm (21) der Werkzeughalterung (20) an dem dem Pflegewerkzeug (11) abgewandten Bereich U- oder bogenförmig ausgebildet ist, wobei ein abgebogener Endbereich mit einer Koppel (29) verbunden ist.

7. Kehrmaschine nach einem oder mehreren der vorhersehenden Ansprüche 1 bis 6, **dadurch gekennzeichnet, dass** die Laufräder der Kehrmaschine an einem hinteren Ende durch zwei Lenkrollen (15) gebildet sind.

8. Kehrmaschine nach Anspruch 7, **dadurch gekennzeichnet, dass** das Landschaftspflegegerät mit einer zwischen Lenkrollen (15) und dem Pflegewerkzeug (11) liegenden, angetriebenen Achse (16) ausgestattet ist, auf die ein Antriebsrad (17) oder ein Zwillingsrad drehfest aufgesetzt ist, das ein weiteres Laufrad der Kehrmaschine bildet.

9. Kehrmaschine nach Anspruch 8, **dadurch gekennzeichnet, dass** das Antriebsrad (17) in der Mittellängsachse der Kehrmaschine (10) steht, oder dass die beiden Räder des Zwillingsrades im gleichen Abstand zu dieser Achse stehen.

10. Kehrmaschine nach einem oder mehreren der vorhergehenden Ansprüche 1 bis 6, **dadurch gekennzeichnet, dass** die Laufräder der Kehrmaschine an einem hinteren Ende durch eine Lenkrolle gebildet sind.

11. Kehrmaschine nach einem oder mehreren der vorhergehenden Ansprüche 1 bis 10, **dadurch gekennzeichnet, dass** das Getriebe (14) der pflegegerätes (10) auf einem Fahrschemel (13) angeordnet ist.

12. Kehrmaschine nach einem der Ansprüche 1 bis 11, **dadurch gekennzeichnet, dass** die Lenker (25, 26) an ihren den ortsfesten Achsen (23, 24) gegenüberliegenden Enden verschiebbar mittels Bolzen (30, 31) in Langlöchern (27, 28) geführt sind.

13. Kehrmaschine nach Anspruch 12, **dadurch gekennzeichnet, dass** wenigstens eine der ortsfesten Achsen (23, 24) und/oder wenigstens einer der Bolzen (30, 31) zur Verlagerung des Schwenkpunktes der Werkzeughalterung (20) zur Einstellung auf unterschiedliche Kehrbürsten (11) verschiebbar ist.

## Claims

1. Sweeping machine (10) having a plurality of running wheels (15, 17), having a drive motor and a transmission (14) and having a rotary-driven cleaning tool (11), which is mounted on a pivotable tool holder (20) and in normal forward travel lies at the front in the direction of travel, **characterized in that** the pivotable tool holder (20) is fixed to at least one tie linkage (22), which has at least two link rods (25, 26) pivotable about fixed axles (23, 24) such that the swivel axis of the tool holder (20) lies outside the range of swivel of the tool holder (20), so that the cleaning tool (11) is freely pivotable, and the swivel axis of the tool holder (20) is offset downwards relative to the rotational axis of the cleaning tool (11) and lies as close to the ground as possible.

2. Sweeping machine according to Claim 1, **characterized in that** the tool holder (20) has at least one supporting arm (21), which is situated above the tie linkage (22).

3. Sweeping machine according to Claim 1 or 2, **characterized in that** the tie linkage (22) is configured as a multi-bar chain, preferably as a four-bar chain.

4. Sweeping machine according to one or more of the preceding Claims 1 to 3, **characterized in that** the position of the swivel axis of the tool holder (20) changes in the course of pivoting of the tool holder (20).

5. Sweeping machine according to one or more of the preceding claims 2 to 4, **characterized in that** the pivotable ends of the link rods (25, 26) which are facing away from the fixed axles (23, 24) are connected by means of a connecting rod (29), and **in that** the connecting rod (29) is fixedly connected to the at least one supporting arm (21) of the tool holder (20) .

6. Sweeping machine according to one or more of the preceding Claims 2 to 4, **characterized in that** the at least one supporting arm (21) of the tool holder (20), at the region facing away from the cleaning tool (11), is of U-shaped or arc-shaped configuration, a bent-off end region being connected to a connecting rod (29).

7. Sweeping machine according to one or more of the preceding Claims 1 to 6, **characterized in that** the running wheels of the sweeping machine, at a rear end, are formed by two castor wheels (15).

8. Sweeping machine according to Claim 7, **characterized in that** the land-cleaning apparatus is equipped with a driven axle (16), which lies between castor wheels (15) and the cleaning tool (11) and on which a drive wheel (17) or a twin wheel is mounted in a rotationally secure manner, which latter forms a further running wheel of the sweeping machine.

9. Sweeping machine according to Claim 8, **characterized in that** the drive wheel (17) stands in the central longitudinal axis of the sweeping machine (10), or **in that** the two wheels of the twin wheel stand at equal distance to this axis.

10. Sweeping machine according to one or more of the preceding Claims 1 to 6, **characterized in that** the running wheels of the sweeping machine, at a rear end, are formed by a castor wheel.

11. Sweeping machine according to one or more of the preceding Claims 1 to 10, **characterized in that** the transmission (14) of the sweeping machine (10) is disposed on a sub-frame (13).

12. Sweeping machine according to one of Claims 1 to 11, **characterized in that** the link rods (25, 26), at their ends opposite the fixed axles (23, 24), are guided displaceably by means of bolts (30, 31) in long holes (27, 28).

13. Sweeping machine according to Claim 12, **characterized in that** at least one of the fixed axles (23, 24) and/or at least one of the bolts (30, 31) is displaceable for movement of the swivel point of the tool holder (20) for adjustment to different sweeping brushes (11).

## Revendications

1. Balayeuse (10) comportant plusieurs roues de roulement (15, 17), comportant un moteur d'entraînement et une transmission (14) ainsi qu'un outil d'entretien (11) qui peut être entraîné en rotation et qui est monté sur une fixation d'outil (20) pivotante et qui, en marche avant normale, se trouve à l'avant dans le sens de marche, **caractérisée en ce que** la fixation d'outil (20) pivotante est fixée à au moins une tringlerie d'attache (22) qui comporte au moins deux bras oscillants (25, 26) pouvant pivoter autour d'axes (23, 24) fixes, de manière que l'axe de pivotement de la fixation d'outil (20) se situe à l'extérieur de la zone de pivotement de la fixation d'outil (20), ce qui fait que l'outil d'entretien (11) peut pivoter librement, et l'axe de pivotement de la fixation d'outil (20) est décalé vers le bas par rapport à l'axe de rotation de l'outil d'entretien (11), et se trouve à une distance aussi petite que possible du sol.

2. Balayeuse selon la revendication 1, **caractérisée en ce que** la fixation d'outil (20) comporte au moins un bras de support (21) qui se situe au-dessus de la tringlerie d'attache (22).

3. Balayeuse selon la revendication 1 ou 2, **caractérisée en ce que** la tringlerie d'attache (22) est réalisée comme chaîne à plusieurs articulations, de préférence comme chaîne à quatre articulations.

4. Balayeuse selon une ou plusieurs des revendications 1 à 3 précédentes, **caractérisée en ce que** la position de l'axe de pivotement de la fixation d'outil (20) est modifiée au cours du pivotement de la fixation d'outil (20).

5. Balayeuse selon une ou plusieurs des revendications 2 à 4 précédentes, **caractérisée en ce que** les extrémités pivotantes des bras oscillants (25, 26), tournées à l'opposé des axes fixes (23, 24), sont reliées au moyen d'une bielle (29), et **en ce que** la bielle (29) est solidaire du au moins un bras de support (21) de la fixation d'outil (20).

6. Balayeuse selon une ou plusieurs des revendications 2 à 4 précédentes, **caractérisée en ce que** le au moins un bras de support (21) de la fixation d'outil (20) est réalisé en forme de U ou d'arc dans la zone tournée à l'opposé de l'outil d'entretien (11), une zone d'extrémité repliée étant reliée à une bielle (29).

7. Balayeuse selon une ou plusieurs des revendications 1 à 6 précédentes, **caractérisée en ce que** les roues de roulement de la balayeuse sont formées à une extrémité arrière par deux roulettes de guidage (15).

8. Balayeuse selon la revendication 7, **caractérisée en ce qu'**elle est équipée d'un essieu entraîné (16), situé entre les roulettes de guidage (15) et l'outil d'entretien (11), sur lequel est montée solidairement en rotation une roue d'entraînement (17) ou des roues jumelées qui forment une roue de roulement supplémentaire de la balayeuse.

9. Balayeuse selon la revendication 8, **caractérisée en ce que** la roue d'entraînement (17) se trouve sur l'axe longitudinal médian de la balayeuse (10), ou **en ce que** les deux roues jumelées se trouvent à même distance de cet axe.

10. Balayeuse selon une ou plusieurs des revendications 1 à 6 précédentes, **caractérisée en ce que** les roues de roulement de la balayeuse sont formées à une extrémité arrière par une roulette de guidage.

11. Balayeuse selon une ou plusieurs des revendications 1 à 10 précédentes, **caractérisée en ce que** sur la transmission (14) de la balayeuse (10) est disposé un faux-châssis (13).

12. Balayeuse selon l'une des revendications 1 à 11, **caractérisée en ce que** les bras oscillants (25, 26) sont guidés à leurs extrémités faisant face aux axes (23, 24) fixes, de manière à pouvoir coulisser dans des trous oblongs (27, 28), au moyen de chevilles (30, 31).

13. Balayeuse selon la revendication 12, **caractérisée en ce qu'**au moins l'un des axes fixes (23, 24) et/ou au moins l'une des chevilles (30, 31) peut coulisser pour déplacer le point de pivotement de la fixation d'outil (20) en vue du réglage sur différentes brosses de balayage (11).
